(19) Europäisches Patentamt / European Patent Office / Office européen des brevets

(11) **EP 4 202 772 B1**

(12) **FASCICULE DE BREVET EUROPEEN**

(45) Date de publication et mention de la délivrance du brevet:
**15.07.2026 Bulletin 2026/29**

(21) Numéro de dépôt: **22215295.1**

(22) Date de dépôt: **21.12.2022**

(51) Classification Internationale des Brevets (IPC):
*G06N 3/045* (2023.01)   *G06N 3/047* (2023.01)
*G06N 3/0475* (2023.01)   *G06N 3/088* (2023.01)
*G06N 3/0895* (2023.01)   *G06N 3/09* (2023.01)

(52) Classification Coopérative des Brevets (CPC):
**G06N 3/09; G06N 3/045; G06N 3/047;
G06N 3/0475; G06N 3/088; G06N 3/0895**

(54) **PROCÉDÉ DE MISE AU POINT D'UN DISPOSITIF DE CLASSIFICATION, PROCÉDÉ ET SYSTÈME ASSOCIÉS**

VERFAHREN ZUM FOKUSSIEREN EINER KLASSIFIZIERUNGSVORRICHTUNG, VERFAHREN UND SYSTEM DAFÜR

METHOD FOR DEVELOPING A CLASSIFICATION DEVICE, METHOD AND SYSTEM THEREOF

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.12.2021 FR 2114231**

(43) Date de publication de la demande:
**28.06.2023 Bulletin 2023/26**

(73) Titulaire: **THALES**
**92400 Courbevoie (FR)**

(72) Inventeur: **du MAS des BOURBOUX, Hélion, Marie**
**91767 Palaiseau (FR)**

(74) Mandataire: **Lavoix**
**2, place d'Estienne d'Orves**
**75441 Paris Cedex 09 (FR)**

(56) Documents cités:
**WO-A1-2021/236884**

• **SRAVANTI ADDEPALLI ET AL: "DeGAN : Data-Enriching GAN for Retrieving Representative Samples from a Trained Classifier", ARXIV.ORG, CORNELL UNIVERSITY LIBRARY, 201 OLIN LIBRARY CORNELL UNIVERSITY ITHACA, NY 14853, 27 December 2019 (2019-12-27), XP081566503**
• **BHAT BHARATH: "On Getting Confidence Estimates from Neural Networks | Bharath's notes", 4 April 2021 (2021-04-04), GitHub, pages 1 - 10, XP093025084, Retrieved from the Internet <URL:https://bharathpbhat.github.io/2021/04/04/getting-confidence-estimates-from-neural-networks.html> [retrieved on 20230217]**

**Description**

La présente invention concerne un procédé de mise au point d'un dispositif de classification. Elle concerne aussi un procédé d'observation, un dispositif de classification et un système d'observation.

La présente invention se situe dans le domaine de la mise au point de dispositifs de classification utilisant des réseaux de neurones appris par utilisation d'une technique d'apprentissage machine.

L'apprentissage machine est désigné par de nombreux termes différents comme le terme anglais de « machine learning », le terme « apprentissage automatique », le terme « apprentissage artificiel » ou encore le terme « apprentissage statistique ». L'apprentissage machine consiste à utiliser des données pour apprendre un dispositif de classification.

Cela conduit à obtenir des réseaux de neurones capables de prédire une classe et d'estimer une confiance dans cette prédiction.

Toutefois, cette confiance n'est pas robuste dans la mesure pour des données d'entrées rares dans l'ensemble des données apprises ou bien différentes des données apprises, cette confiance peut facilement être trompée.

Il est également connu un tel procédé de l'article de Sravanti Addepalli et al. intitulé « DeGAN : Data-Enriching GAN for Retrieving Representative Samples from a Trained Classifier » en date du 27 décembre 2019.

Il existe donc un besoin pour un procédé de mise au point d'un dispositif de classification qui permet d'obtenir des estimées de la confiance de prédiction du dispositif de classification plus robustes.

A cet effet, la description décrit un procédé selon la revendication 1.

Selon des modes de réalisation particuliers, le procédé présente une ou plusieurs des caractéristiques des revendications 2 à 6, prise(s) isolément ou selon toutes les combinaisons techniquement possibles.

La description décrit également un système d'observation selon la revendication 7.

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un système d'observation, et
- la figure 2 est une représentation schématique d'un exemple de mise en œuvre d'un procédé de mise au point d'un dispositif de classification faisant partie du système d'observation de la figure 1.

Le système d'observation 10 est un système propre à observer l'environnement.

Le système d'observation 10 comporte un capteur 12 et un dispositif de classification 14.

Le capteur 12 est propre à acquérir un signal de l'environnement.

Tout type de signal peut ici être envisagé, un signal audio, un signal visuel notamment.

En outre, le signal peut provenir de plusieurs capteurs si besoin.

Pour la suite, il est supposé que le capteur 12 est une caméra à titre illustratif.

Le dispositif de classification 14 est un dispositif propre à classer les signaux provenant du capteur 12, qui sont ainsi des signaux d'entrée pour le dispositif de classification.

Ces signaux sont des signaux audio, radios ou des images.

Le dispositif de classification 14 prend en entrée un signal d'entrée issu d'au moins un capteur et prédit en sortie l'appartenance à une classe parmi un ensemble de classes prédéfinies et estimant une valeur de confiance en cette prédiction d'appartenance.

Par exemple, l'image présentée par le capteur 12 est un chien avec une valeur de confiance de 70%.

La classe « chien » est une classe parmi un ensemble de classes dont chaque classe est un animal, par exemple, un chien, un chat, ou un poisson.

Dans la suite, le nombre de classes est noté n.

Le dispositif de classification 14 est, en l'occurrence, un dispositif physique implémentant un réseau de neurones.

Le dispositif physique est, de préférence, un dispositif embarqué comme un circuit logique programmable, tel un FPGA (abréviation du terme anglais correspondant de « field-programmable gate array ») ou bien un CPU (abréviation du terme anglais correspondant de « Central Processing Unit » signifiant littéralement unité centrale de traitement) ou un GPU (abréviation du terme anglais correspondant de « Graphical Processing Unit » signifiant littéralement unité graphique de traitement) ou encore un SoC (acronyme du terme anglais correspondant de « System on Chip » signifiant littéralement système sur puce) intégrant par exemple des DSP (abréviation du terme anglais correspondant de « Digital Signal Processor » signifiant littéralement processeur de signal numérique). Le dispositif physique peut également être une combinaison des composants cités.

Un réseau de neurones est notamment défini dans l'ouvrage « Deep Learning », Ian Goodfellox, Yoshua Bengio, Aaron Courville, The MIT Press, 18 novembre 2016, chapitre 6.

En fonctionnement, le système d'observation 10 met en œuvre un procédé d'observation comportant deux étapes.

Lors de la première étape, le capteur 12 acquiert un signal d'entrée, ici dans l'exemple, une image de l'environnement.

Puis, lors de la deuxième étape, le dispositif de classification 14 classe le signal acquis selon des classes prédéfinies.

Ici, le dispositif de classification 14 donnera le nom de l'animal contenu dans l'image.

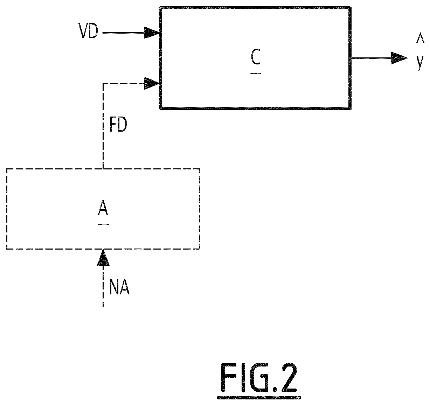

Dans l'exemple proposé, le classement réalisé est de meilleure qualité car le dispositif de classification 14 a été mis au point par un procédé de mise au point spécifique qui va maintenant être décrit en référence à la figure 2.

Un tel procédé de mise au point est mis en œuvre par ordinateur, et de préférence par un calculateur.

Le procédé de mise au point cherche à optimiser le réseau de neurones du dispositif de classification 14.

Pour la suite, ce réseau de neurones est ainsi un réseau de neurones cible, celui dont on cherche à améliorer les performances. Le terme « réseau de neurones de classification C » sera utilisé dans la suite pour désigner ce réseau de neurones.

Le procédé de mise au point comporte une étape de réception, une étape de premier entraînement du réseau de neurones de classification C, une étape de synthèse de données, une étape de deuxième entraînement du réseau de neurones de classification C et une étape d'entraînement d'un réseau de neurones adverse génératif.

Le procédé de mise au point est un procédé itératif au sens où les étapes d'entraînement et de synthèse sont réitérées jusqu'à ce qu'un premier critère de performance sur les prédictions du réseau de neurones de classification C soit rempli ainsi qu'un deuxième critère de performance sur les valeurs de confiance des prédictions du réseau de neurones de classification C soit rempli.

En l'occurrence, ce premier critère de performance consiste à requérir que le rapport du nombre de bonnes prédictions sur le nombre total de prédictions dépasse une valeur choisie, ou bien que ce même rapport ait stagné pendant un nombre choisis d'itérations (ou d'époques comme cela sera expliqué ultérieurement).

Le deuxième critère de performance est, quant à lui, double : d'une part, le procédé cherche à donner des prédictions justes avec une bonne valeur de confiance pour des données connues et d'autre part à donner des valeurs de confiance très basse pour des données que le réseau de neurones de classification C n'est pas capable de comprendre.

Lors de l'étape de réception, le calculateur reçoit une base de données dans laquelle chaque donnée donne pour un signal d'entrée la classe associée.

La base de données est ainsi un jeu de donnée d'apprentissage pour la tache de classification, en classes distinctes, le nombre de classes étant indifférent.

Ce jeu de donnée correspond à des paires $(X, y)_i$ où $X_i$ est une donnée issue d'un signal de capteur (par exemple, cela peut être une image) et $y_i$ est un encodage numérique de la vraie classe de la donnée $X_i$.

Typiquement, l'encodage est obtenu par un encodage « 1 parmi n » ou en Anglais « on-hot encoding ».

Pour reprendre un exemple précédent de trois classes n = 3, (1, 0, 0) correspond à la classe 0 « chien », (0, 1, 0) à la classe 1 « chat » et (0, 0, 1) à la classe 2 « poisson ». La classe est alors obtenue par l'indice du plus grand nombre dans le vecteur $y_i = (y_{ij})_{0 \leq j < n}$.

Lors de l'étape de premier entraînement, le réseau de neurones de classification C est appris comme l'illustrent schématiquement les traits pleins sur la figure 2.

Lors d'un apprentissage (ou entraînement) d'un réseau de neurones, le réseau de neurones est appris à partir d'une base d'apprentissage. De manière connue, un réseau de neurones est dit appris quand l'ensemble de ses paramètres libres est ajusté dans une procédure dite d'apprentissage pour résoudre au mieux le problème posé, selon un critère défini, sur un ensemble de données dits d'apprentissage pour lesquels le résultat désiré en sortie du réseau de neurones peut être connu (dans le cas d'un apprentissage supervisé).

Lors de cet apprentissage, les différents paramètres libres du réseau sont ainsi déterminés.

Ici, le premier entraînement est mis en œuvre avec la base de données reçue.

Au préalable, cette base de données, est séparée en trois bases distinctes : base d'entraînement, base de validation et base de test. La proportion du nombre d'éléments de chacune des bases précédentes par rapport au nombre total d'éléments de la base de données reçue est, par exemple, 70%, 15% et 15%.

Plus précisément, il est extrait un ensemble de données de la base de données. Ces données constituent un ensemble de vraies données noté VD dans la figure 2.

De plus, il est décidé au préalable d'un nombre maximum d'époques. Une époque est définie par l'utilisation de toutes les données différentes de l'ensemble de la base d'entraînement. On note $N_e$ le nombre d'époque, qui est un nombre grand, par exemple $N_e = 10\,000$.

Pour chaque époque, les données de la base d'entraînement sont regroupées en différents ensembles de manière aléatoire pour former ce qui est appelé des lots de données ou plus communément des « batchs » de données selon la dénomination anglaise correspondante.

Le nombre de couples du lot est noté N dans la suite.

Pour l'ensemble des données X du lot, il est calculé la prédiction de classe obtenue par le réseau de neurones de classification C. Cette prédiction est notée ŷ.

Lors de cet entraînement, il est utilisé un critère d'apprentissage.

Le critère d'apprentissage correspond à une évaluation de l'erreur de détermination de la fonction de détermination.

Le critère d'apprentissage est souvent dénommé « fonction de perte ».

Dans l'exemple décrit, la fonction de perte est spécifique et est notée première fonction de coût $FC_1$.

Cette fonction est l'entropie croisée douce appliquée aux classes prédites par le dispositif de classification et aux classes de la base de données. Le terme « entropie croisée douce » est plus souvent désigné par l'appellation anglaise correspondante de « soft cross entropy ».

Ainsi, le calculateur vient ainsi calculer la fonction mathématique suivante :

$$FC_1(y, \hat{y}) = \frac{1}{\log n} \frac{1}{N} \sum_{i=0}^{N-1} \sum_{j=0}^{n-1} (-y_{ij} \times \log \widehat{\sigma_{ij}})$$

Où :

- $FC_1(y, \hat{y})$ désigne une fonction de coût à optimiser,
- $y$ la valeur réelle de la classe, et
- $\widehat{\sigma_{ij}}$ est la fonction exponentielle normalisée (plus souvent désigné par le terme « softmax ») associée à la prédiction $\widehat{y_{ij}}$.

Les paramètres libres du réseau de neurones de classification C sont alors mis à jour par exploitation de la valeur de la première fonction de coût $FC_1$ dans une technique de rétro-propagation du gradient.

En parallèle ou après, un réseau de neurones adverse génératif synthétise des données lors de l'étape de synthèse de données, comme illustré très schématiquement sur la figure 2 avec des traits en pointillés.

Plus précisément, le réseau de neurones adverse génératif génère à partir de nombres aléatoires (notées NA sur la figure 2) des données destinées à tromper le dispositif de classification.

De tels nombres aléatoires NA peuvent être tirées selon différentes distributions, par exemple selon une loi normale ou selon une loi uniforme.

De telles données pourraient être qualifiées de « fausses données » et sont notées FD sur la figure 2.

Un réseau de neurones adversaire génératif est plus souvent désigné par l'acronyme GAN qui renvoie à la dénomination anglaise correspondante de « Generative Adversarial Network »).

Le réseau de neurones adverse génératif constitue donc un réseau de neurones d'attaque noté A.

Pour tromper le réseau de neurones de classification C, chaque donnée synthétisée est un couple d'une valeur correspondant à un signal et d'une valeur correspondant à une répartition de la classification sur toutes les classes, et le nombre de données synthétisées correspond au nombre de couples du lot utilisé lors de la première étape d'entraînement.

Plus précisément, dans l'exemple la répartition entre toutes les classes de chaque donnée synthétisée est $\tilde{y}_i = \left(\frac{1}{n}\right)_{0 \leq j < n}$. Par exemple, pour l'exemple de chien, chat et poisson, $\tilde{y}_i = \left(\frac{1}{3}, \frac{1}{3}, \frac{1}{3}\right)$. Cela permet d'obtenir une équiprobabilité sur toutes les classes.

Lors de l'étape de deuxième entraînement du réseau de neurones de classification C, le calculateur met en œuvre un deuxième entraînement.

Ce deuxième entraînement est mis en œuvre sur les données synthétisées FD.

Plus précisément, il est extrait un lot de l'ensemble des données, le même que dans le cas du premier entraînement, mais ce n'est pas obligatoire.

Plus précisément, les données synthétisées FD peuvent être générées à partir de l'état actuel du réseau adversaire A, ou bien à partir d'une des sauvegardes de son état antérieur, sélectionnés de manière aléatoire. Le terme « état » s'entend ici comme les valeurs des paramètres à l'itération concernée.

La répartition entre l'utilisation de l'état actuel et d'un état antérieur peut se faire de manière aléatoire : par exemple 90% du temps l'état actuel et 10% du temps un état antérieur aléatoirement choisis parmi tous ceux disponibles.

Ce choix d'utiliser aléatoirement différents état du réseau adversaire génératif permet d'augmenter la diversité des attaques soumises au réseau de classification C.

Pour l'ensemble des données X du lot, il est générée un lot $\tilde{X}$ via le réseau de neurones d'attaque A à partir des nombres aléatoires NA. De même, il est produit un vecteur des vraies classes des données synthétiques $\tilde{y}$. Il est calculé la prédiction de classe obtenue par le réseau de neurones de classification C sur les données synthétiques $\tilde{X}$. Cette prédiction est également notée $\hat{y}$.

Il ensuite utilisé à cette étape de deuxième entraînement une deuxième fonction de coût $FC_2$ qui est également une soft cross entropy appliquée aux classes prédites par le dispositif de classification et aux classes réelles des données synthétisées.

Ainsi, le calculateur vient ainsi calculer la fonction mathématique suivante :

$$FC_2(\tilde{y}, \hat{y}) = \frac{1}{\log n} \frac{1}{N} \sum_{i=0}^{N-1} \sum_{j=0}^{n-1} (-\tilde{y}_{ij} \times \log \widehat{\sigma_{ij}})$$

Où :

- $FC_2(y, \hat{y})$ désigne une fonction de coût à optimiser, et

- $\tilde{y}$ la valeur réelle de la classe qui est ici tel que $\tilde{y}_{ij} = \left(\frac{1}{n}\right)_{0 \le j < n}$ .

Les paramètres libres du réseau de neurones de classification C sont alors mis à jour par exploitation de la valeur de la deuxième fonction de coût $FC_2$ dans une technique de rétro-propagation du gradient.

Lors de l'étape d'entraînement du réseau de neurones adverse génératif, le calculateur vient cette fois-ci entraîner le réseau de neurones adverse génératif A.

A partir des données aléatoires NA, le réseau de neurones adverse génératif A va apprendre à générer des valeurs $\tilde{X}$ correspondant à un signal. Le réseau de neurones adverse génératif A en génère autant que le nombre de couples du lot utilisé lors de la deuxième étape d'entraînement.

Le calculateur fait ensuite calculer au réseau de neurones de classification C la valeur de sa prédiction $\hat{y}$ à partir des valeurs $\tilde{X}$.

Il ensuite utilisé à cette étape d'entraînement une fonction de coût qui sera notée fonction de coût $FC_A$.

La fonction de coût $FC_A$ fait intervenir une fonction de coût sur la capacité à tromper le réseau de neurones C, à être confiant sur au moins une des classes.

Selon l'exemple décrit, pour cela, il est utilisé une première sous-fonction de coût $SL_1$ ayant pour objectif de mesurer à quel point le réseau de classification C a été trompé par les données $\tilde{X}$ et a pu donner faussement une classification confiante.

Autrement formulé, la première sous-fonction de coût $SL_1$ dépend, pour chaque prédiction effectuée, de l'amplitude avec laquelle le réseau C a été trompé.

En l'espèce, la première sous-fonction de coût $SL_1$ utilise les valeurs des logits associés à chaque prédiction.

Une telle sous-fonction de coût s'écrit mathématiquement, par exemple, comme :

$$SL_1(\hat{y}) = \frac{1}{\log n} \frac{1}{N} \sum_{i=0}^{N-1} (-\max(p_{ij})_{0 \le j < n} + \log \sum_{j=0}^{n-1} \exp p_{ij})$$

Où :

- $\hat{p}_{ij}$ est la valeur du logit associé à la prédiction $\hat{y}_{ij}$.

Alternativement, au lieu d'utiliser le maximum des logits, il serait envisageable d'utiliser la différence en valeur entre le maximum et la valeur maximale des valeurs restantes.

En outre, dans le cas spécifique décrit, la fonction de coût $FC_A$ fait également intervenir une fonction de coût sur la diversité des données synthétisées, c'est-à-dire une fonction de coût favorisant la diversité des données synthétisées.

Par « diversité » dans ce contexte, il est entendu le fait que chaque donnée synthétisée est unique. L'unicité s'évalue ici pour chaque élément du couple. Autrement formulé, deux données synthétisées ne sont pas uniques si au moins l'un des éléments du couple diffère.

Selon l'exemple décrit, la fonction de coût sur la diversité des données synthétisées est la somme d'une deuxième sous-fonction de coût $SL_2$ caractérisant la diversité des valeurs correspondant à un signal et d'une troisième sous-fonction de coût $SL_3$ caractérisant la diversité des valeurs correspondant à une classe.

Par exemple, la deuxième sous-fonction de coût $SL_2$ s'écrit mathématiquement ainsi :

$$SL_2(R, \tilde{X}) = \frac{1}{\sum_{i=0}^{\tilde{N}-1} \sum_{j=0}^{i-1} \overline{(|R_i - R_j|)}^l} \sum_{i=0}^{\tilde{N}-1} \sum_{j=0}^{i-1} \frac{\overline{(|R_i - R_j|)}^l}{1 + \overline{(|\tilde{X}_i - \tilde{X}_j|)}^l}$$

Où :

- $l$ est un entier qui donne la norme, par exemple $l = 2$,
- $\overline{A}$ donne la moyenne de A,
- $R$ désigne un vecteur dont chaque composante est un nombre aléatoire NA, et
- $\tilde{N}$ est un sous-ensemble des donnés synthétisées, par exemple les 10 premières données synthétisées.

Une telle formulation de la deuxième sous-fonction de coût $SL_2$ permet de forcer le réseau de neurones adverse génératif A à apprendre des $\tilde{X}_i$ différents et pas toujours les mêmes.

En outre, il est utilisé via $\tilde{N}$ une limitation permettant d'obtenir la diversité avec un coût en calcul maîtrisé.

Avec des notations similaires, il peut également être proposé une troisième sous-fonction de coût $SL_3$, portant elle sur la diversité de la classification, s'écrivant mathématiquement comme suit :

$$SL_3(R, \hat{y}) = \frac{1}{\sum_{i=0}^{\tilde{N}-1} \sum_{j=0}^{i-1} \overline{(|R_i - R_j|)}^l} \sum_{i=0}^{\tilde{N}-1} \sum_{j=0}^{i-1} \frac{\overline{(|R_i - R_j|)}^l}{1 + \sum_{k=0}^{n-1} - \widehat{\sigma_{ik}} \times \log \widehat{\sigma_{jk}}}$$

Similairement au cas de la deuxième sous-fonction de coût $SL_2$, une telle formulation permet de forcer le réseau de neurones adverse génératif A à apprendre des classes très variées tout en conservant un coût en calcul maîtrisé.

Dans l'exemple décrit, la fonction de coût $FC_A$ utilisée pour l'entraînement du réseau de neurones adverse génératif A est une composée des trois sous-fonctions de coûts précédentes.

A titre d'illustration, ces trois sous-fonctions peuvent être composées par une addition pondérée par des poids.

Il vient ainsi :

$$FC_A(y, \hat{y}, R, \tilde{X}) = \lambda_1 SL_1 + \lambda_2 SL_2 + \lambda_3 SL_3$$

Dans cet exemple, les valeurs $\lambda_1$, $\lambda_2$ et $\lambda_3$ sont des poids permettant de moduler l'importance des sous-fonctions de coût précitées.

Pour une optimisation prenant en compte à égale importance l'ensemble des sous-fonctions de coût précitées, il suffit de fixer l'égalité suivante :

$$\lambda_1 = \lambda_2 = \lambda_3 = \frac{1}{3}.$$

Les paramètres libres du réseau de neurones adverse génératif A sont alors mis à jour par exploitation de la valeur de la fonction de coût globale dans une technique de rétro-propagation du gradient.

Comme expliqué plus haut, les étapes de synthèse et d'entraînement sont répétées pour tous les lots d'une époque, et pour chaque époque.

A la fin de chaque époque, l'état du réseau adversaire génératif A le plus performant est sauvegardé ainsi que l'état à la fin de l'époque. Ces sauvegardes peuvent être utilisés à l'étape d'entrainement du réseau de classification C sur données synthétiques.

Ces étapes sont répétées jusqu'à ce qu'un critère soit vérifié.

Le critère est, par exemple, que les valeurs de chaque fonction de coût $FC_1$, $FC_2$ et $FC_A$ atteignent une valeur souhaitée sur la base de validation.

Selon un autre exemple, le critère est qu'un budget en temps de calcul soit atteint.

Il peut également être envisagé un critère mixte prenant en compte les deux critères précédents, par exemple via une pondération.

Il est ainsi obtenu un réseau de neurones adverse génératif A appris ainsi qu'un réseau de classification C appris.

Un tel procédé permet ainsi d'obtenir le réseau de neurones de classification C souhaité, c'est-à-dire un réseau de neurones de classification C présentant une estimée de la confiance de meilleure qualité tout en conservant une forte capacité de prédiction.

En effet, l'estimée de la confiance est plus robuste face aux attaques (ici celles générées par le réseau de neurones adverse génératif) et face aux échantillons hors de la distribution de la base de données ayant servi de base d'apprentissage.

Cette meilleure robustesse est notamment obtenue par l'amélioration de la diversité des données produites par le réseau de neurones adverse génératif.

De plus, le procédé de mise au point reste relativement aisé à mettre en œuvre dans la mesure où seuls deux réseaux de neurones C et A sont utilisés et notamment pas de réseau discriminateur.

Ceci a également des conséquences lors de la phase d'inférence puisque seul le réseau de neurones de classification C a à être déployé. Plus précisément, il n'est pas nécessaire d'effectuer un portage à la fois sur le réseau discriminateur et seul le réseau de neurones de classification C doit être porté.

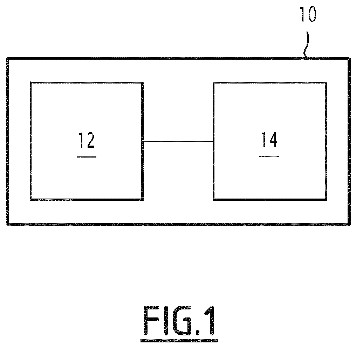

Cela implique qu'en production, dans la figure 1, le dispositif de classification 14 implémente physiquement le réseau de classification C.

Cet avantage est obtenu pour tous les types d'implémentations physiques et en particulier, pour les implémentations physiques contraintes.

Ainsi, le dispositif de classification 14 présente des propriétés de classification améliorées, ce qui améliore la qualité de l'observation du système d'observation 10.

**Revendications**

1. Procédé d'observation d'un environnement par un système d'observation (10), le système d'observation (10) comprenant un dispositif de classification (14), le dispositif de classification (14) prenant en entrée un signal d'entrée issu d'au moins un capteur (12) et prédisant en sortie l'appartenance à une classe parmi un ensemble de classes prédéfinies et une valeur de confiance en cette prédiction d'appartenance, le signal d'entrée étant une image, un signal audio, ou un signal radio, le procédé comprenant :

   - une phase d'amélioration des performances dudit dispositif de classification (14), la phase d'amélioration dudit dispositif de classification comprenant les étapes de :

      - réception d'une base de données dans laquelle chaque donnée donne pour un signal d'entrée la classe associée,
      - premier entraînement du dispositif de classification, le premier entraînement étant mis en œuvre avec la base de données reçue,
      - synthèse de données par un réseau de neurones adverse génératif propre à générer des données destinées à tromper le dispositif de classification à partir de nombres aléatoires,
      - deuxième entraînement du dispositif de classification, le deuxième entraînement étant mis en œuvre sur les données synthétisées, et
      - entraînement du réseau de neurones adverse génératif, l'entraînement du réseau de neurones adverse génératif étant mis en œuvre en utilisant les nombres aléatoires et en utilisant une fonction de coût sur la capacité à tromper le dispositif de classification, la fonction de coût sur la capacité à tromper le dispositif de classification utilisant les valeurs des logits associés à chaque prédiction,
      - amélioration de la qualité de l'estimée de confiance présentée par ledit dispositif de classification en réitérant les étapes d'entraînement et de synthèse jusqu'à ce qu'un premier critère de performance sur les prédictions et un deuxième critère de performance sur les valeurs de confiance des prédictions du dispositif de classification soient remplis ;

   - une phase d'utilisation dudit dispositif de classification amélioré via ladite phase d'amélioration, ladite phase d'utilisation comprenant les étapes de :

      - acquisition d'un signal d'entrée par l'au moins un capteur (12), et
      - classification du signal acquis selon des classes prédéfinies en utilisant le dispositif de classification (14).

2. Procédé selon la revendication 1, dans lequel, lors de l'étape d'entraînement du réseau de neurones adverse génératif, il est également utilisé une fonction de coût également sur la diversité des données synthétisées.

3. Procédé selon la revendication 2, dans lequel chaque donnée synthétisée étant un couple d'une valeur correspondant à un signal et d'une valeur correspondant à une classe, la fonction de coût sur la diversité des données synthétisées est la somme d'une sous-fonction de coût caractérisant la diversité des valeurs correspondant à un signal et d'une sous-fonction de coût caractérisant la diversité des valeurs correspondant à une classe.

4. Procédé selon la revendication 3, dans lequel, lors de l'étape d'entraînement du réseau de neurones adverse génératif, il est utilisé une fonction de coût globale comme une somme pondérée de fonction de coût sur la capacité à tromper le dispositif de classification et des deux sous-fonctions de coût.

5. Procédé selon l'une quelconque des revendications 1 à 4, lors de l'étape de synthèse, la vraie classe de chaque donnée synthétisée est une équipartition sur toutes les classes possibles.

6. Procédé selon l'une quelconque des revendications 1 à 5, dans lequel, lors de l'étape de premier entraînement, il est utilisé comme fonction de coût une entropie croisée douce appliquée aux classes prédites par le dispositif de classification et aux classes de la base de données et, lors de l'étape de deuxième entraînement, il est utilisé comme fonction de coût une entropie croisée douce appliquée aux classes prédites par le dispositif de classification et aux classes de la base de données.

7. Système d'observation (10) comprenant un dispositif de classification (14) prenant en entrée un signal d'entrée issu d'au moins un capteur et prédisant en sortie l'appartenance à une classe parmi un ensemble de classes prédéfinies et une valeur de confiance en cette prédiction d'appartenance, le signal d'entrée étant une image, un signal audio, ou un signal radio,

le système d'observation étant **caractérisé en ce qu'**il est configuré pour mettre en œuvre :

- une phase d'amélioration des performances dudit dispositif de classification (14), la phase d'amélioration dudit dispositif de classification comprenant les étapes de :

- réception d'une base de données dans laquelle chaque donnée donne pour un signal d'entrée la classe associée,
- premier entraînement du dispositif de classification, le premier entraînement étant mis en œuvre avec la base de données reçue,
- synthèse de données par un réseau de neurones adverse génératif propre à générer des données destinées à tromper le dispositif de classification à partir de nombres aléatoires,
- deuxième entraînement du dispositif de classification, le deuxième entraînement étant mis en œuvre sur les données synthétisées, et
- entraînement du réseau de neurones adverse génératif, l'entraînement du réseau de neurones adverse génératif étant mis en œuvre en utilisant les nombres aléatoires et en utilisant une fonction de coût sur la capacité à tromper le dispositif de classification, la fonction de coût sur la capacité à tromper le dispositif de classification utilisant les valeurs des logits associés à chaque prédiction,
- amélioration de la qualité de l'estimée de confiance présentée par ledit dispositif de classification en réitérant les étapes d'entraînement et de synthèse jusqu'à ce qu'un premier critère de performance sur les prédictions et un deuxième critère de performance sur les valeurs de confiance des prédictions du dispositif de classification soient remplis ;

- une phase d'utilisation dudit dispositif de classification amélioré via ladite phase d'amélioration, ladite phase d'utilisation comprenant les étapes de :

- acquisition d'un signal d'entrée par l'au moins un capteur (12), et
- classification du signal acquis selon des classes prédéfinies en utilisant le dispositif de classification (14).

**Patentansprüche**

1. Verfahren zur Beobachtung einer Umgebung durch ein Beobachtungssystem (10), das Beobachtungssystem (10) umfassend eine Klassifizierungsvorrichtung (14), wobei die Klassifizierungsvorrichtung (14) ein Eingangssignal von mindestens einem Sensor (12) nimmt und an dem Ausgang die Zugehörigkeit zu einer Klasse von einem Satz vordefinierter Klassen und einen Konfidenzwert für diese Zugehörigkeitsvorhersage ausgibt, wobei das Eingangssignal ein Bild, ein Audiosignal oder ein Funksignal ist, das Verfahren umfassend:

- eine Phase eines Verbesserns der Leistung der Klassifizierungsvorrichtung (14), die Phase eines Verbesserns der Klassifizierungsvorrichtung umfassend die folgenden Schritte:

- Empfang einer Datenbank, in der jeder Datensatz für ein Eingangssignal die zugehörige Klasse angibt,
- erstes Training der Klassifizierungsvorrichtung, wobei das erste Training mit der empfangenen Datenbasis implementiert wird,
- Datensynthese durch ein erzeugendes gegnerisches neuronales Netz, das geeignet ist, Daten zu erzeugen, die dazu dienen, die Klassifizierungsvorrichtung anhand von Zufallszahlen zu täuschen,
- zweites Training der Klassifizierungsvorrichtung, wobei das zweite Training auf die synthetisierten Daten implementiert wird, und
- Training des erzeugenden gegnerischen neuronalen Netzes, wobei das Training des erzeugenden gegnerischen neuronalen Netzes unter Verwendung der Zufallszahlen und unter Verwendung einer Kostenfunktion über die Fähigkeit, die Klassifizierungsvorrichtung zu täuschen, implementiert wird, wobei die Kostenfunktion über die Fähigkeit, die Klassifizierungsvorrichtung zu täuschen, die Werte von Logits verwendet, die mit jeder Vorhersage assoziiert sind,
- Verbesserung der Qualität der von der genannten Klassifizierungsvorrichtung präsentierten Konfidenzschätzung durch Wiederholung des Trainings- und des Syntheseschritts, bis ein erstes Leistungskriterium für die Vorhersagen und ein zweites Leistungskriterium für die Konfidenzwerte der Vorhersagen der Klassifizierungsvorrichtung erfüllt sind;

- eine Phase eines Verwendens der verbesserten Klassifizierungsvorrichtung über die Verbesserungsphase, wobei die Verwendungsphase die folgenden Schritte umfasst:

- Erfassung eines Eingangssignals durch den mindestens einen Sensor (12), und
- Klassifizierung des erfassten Signals in vordefinierte Klassen unter Verwendung der Klassifizierungsvorrichtung (14).

2. Verfahren nach Anspruch 1, wobei bei dem Schritt eines Trainierens des erzeugenden gegnerischen neuronalen Netzes auch eine Kostenfunktion auch auf die Diversität der synthetisierten Daten verwendet wird.

3. Verfahren nach Anspruch 2, wobei jeder synthetisierte Datensatz ein Paar aus einem Signal entsprechenden Wert und einem einer Klasse entsprechenden Wert ist, wobei die Kostenfunktion auf die Vielfalt der synthetisierten Daten die Summe einer Kostenunterfunktion ist, die die Vielfalt der einem Signal entsprechenden Werte charakterisiert, und einer Kostenunterfunktion, die die Vielfalt der einer Klasse entsprechenden Werte charakterisiert.

4. Verfahren nach Anspruch 3, wobei in dem Schritt des Trainierens des erzeugenden gegnerischen neuronalen Netzes eine Gesamtkostenfunktion als gewichtete Summe der Kostenfunktion über die Fähigkeit, die Klassifizierungsvorrichtung zu täuschen, und der zwei Unterkostenfunktionen verwendet wird.

5. Verfahren nach einem der Ansprüche 1 bis 4, wobei in dem Syntheseschritt die wahre Klasse jeder synthetisierten Daten eine Äquipartition über alle möglichen Klassen ist.

6. Verfahren nach einem der Ansprüche 1 bis 5,
wobei
in dem ersten Trainingsschritt als Kostenfunktion eine weiche Kreuzentropie verwendet wird, die auf die von der Klassifizierungsvorrichtung vorhergesagten Klassen und auf die Klassen in der Datenbank angewendet wird, und in dem zweiten Trainingsschritt als Kostenfunktion eine weiche Kreuzentropie verwendet wird, die auf die von der Klassifizierungsvorrichtung vorhergesagten Klassen und auf die Klassen in der Datenbank angewendet wird.

7. Beobachtungssystem (10), umfassend eine Klassifizierungsvorrichtung (14), die als Eingang ein von mindestens einem Sensor stammendes Eingangssignal nimmt und als Ausgang die Zugehörigkeit zu einer Klasse aus einem Satz vordefinierter Klassen und einen Konfidenzwert für diese Zugehörigkeitsvorhersage vorhersagt, wobei das Eingangssignal ein Bild, ein Audiosignal oder ein Funksignal ist, wobei das Beobachtungssystem **dadurch gekennzeichnet ist, dass** es konfiguriert ist, um Folgendes zu implementieren:

- eine Phase eines Verbesserns der Leistung der Klassifizierungsvorrichtung (14), die Phase eines Verbesserns der Klassifizierungsvorrichtung umfassend die folgenden Schritte:

- Empfang einer Datenbank, in der jeder Datensatz für ein Eingangssignal die zugehörige Klasse angibt,
- erstes Training der Klassifizierungsvorrichtung, wobei das erste Training mit der empfangenen Datenbasis implementiert wird,

- Datensynthese durch ein erzeugendes gegnerisches neuronales Netz, das geeignet ist, Daten zu erzeugen, die dazu dienen, die Klassifizierungsvorrichtung anhand von Zufallszahlen zu täuschen,
- zweites Training der Klassifizierungsvorrichtung, wobei das zweite Training auf die synthetisierten Daten implementiert wird, und
- Training des erzeugenden gegnerischen neuronalen Netzes, wobei das Training des erzeugenden gegnerischen neuronalen Netzes unter Verwendung der Zufallszahlen und unter Verwendung einer Kostenfunktion über die Fähigkeit, die Klassifizierungsvorrichtung zu täuschen, implementiert wird, wobei die Kostenfunktion über die Fähigkeit, die Klassifizierungsvorrichtung zu täuschen, die Werte von Logits verwendet, die mit jeder Vorhersage assoziiert sind,

- Verbesserung der Qualität der von der genannten Klassifizierungsvorrichtung präsentierten Konfidenzschätzung durch Wiederholung des Trainings- und des Syntheseschritts, bis ein erstes Leistungskriterium für die Vorhersagen und ein zweites Leistungskriterium für die Konfidenzwerte der Vorhersagen der Klassifizierungsvorrichtung erfüllt sind;

- eine Phase eines Verwendens der verbesserten Klassifizierungsvorrichtung über die Verbesserungsphase, wobei die Verwendungsphase die folgenden Schritte umfasst:

- Erfassung eines Eingangssignals durch den mindestens einen Sensor (12), und
- Klassifizierung des erfassten Signals in vordefinierte Klassen unter Verwendung der Klassifizierungsvorrichtung (14).

## Claims

1. A method for observing an environment by means of an observation system (10), the observation system (10) comprising a classification device (14), the classification device (14) being configured to receive as input an input signal originating from at least one sensor (12) and to output a prediction of membership of a class from among a set of predefined classes together with a confidence value associated with said membership prediction, the input signal being an image, an audio signal, or a radio signal, the method comprising:

   - a phase for improving the performance of said classification device (14), comprising the following steps:

      - receipt of a database in which each data item provides the associated class for an input signal,
      - first training of the classification system, with the first training implemented using the received database,
      - data synthesis by a generative adversarial neural network configured to generate data, from random numbers, intended to deceive the classification device,
      - a second training of the classification device, the second training being carried out on the synthesised data, and
      - training of the generative adversarial neural network, the training of the generative adversarial neural network being carried out using the random numbers and using a cost function based on the ability to deceive the classification device, the cost function based on the ability to deceive the classification device using the values of the logits associated with each prediction,
      - improving the quality of the confidence estimate provided by said classification device by iterating the training and synthesis steps until a first performance criterion relating to the predictions and a second performance criterion relating to the confidence values of the predictions of the classification device are satisfied;

   - a use phase of said improved classification device via said improvement phase, said use phase comprising the steps of:

      - acquisition of an input signal by at least one sensor (12), and
      - classification of the acquired signal into predefined classes using the classification device (14).

2. A method according to claim 1, in which, during the step of training the generative adversarial neural network, a cost function is also used on the diversity of the synthesised data.

3. A method according to claim 2, in which each synthesised data item is a pair of a value corresponding to a signal and

**EP 4 202 772 B1**

one corresponding to a class, the cost function on the diversity of the synthesised data is the sum of a cost sub-function characterising the diversity of the values corresponding to a signal and a cost sub-function characterising the diversity of the values corresponding to a class.

4. A method according to claim 3, wherein, during the step of training the generative adversarial neural network, an overall cost function is used as a weighted sum of a cost function based on the ability to deceive the classification device and of the two cost sub-functions.

5. A method according to any one of claims 1 to 4, wherein during the synthesis step, the true class of each synthesised data item follows a uniform distribution over all possible classes.

6. A process according to any one of claims 1 to 5,
in which, during
the first training step, a soft cross-entropy is used as the cost function, applied to the classes predicted by the classification device and to the classes of the database, and, during the second training step, a soft cross-entropy is used as the cost function, applied to the classes predicted by the classification device and to the classes of the database.

7. An observation system (10) comprising a classification device (14) taking as input a signal from at least one sensor and predicting as output membership of a class from a set of predefined classes and a confidence value in this membership prediction, the input signal being an image, an audio signal or a radio signal,
the observation system being **characterised in that** it is configured to implement:

   - a phase for improving the performance of said classification device (14), comprising the following steps:

      - receipt of a database in which each data item provides the associated class for an input signal,
      - first training of the classification system, with the first training implemented using the received database,
      - data synthesis by a generative adversarial neural network configured to generate data, from random numbers, intended to deceive the classification device,
      - a second training of the classification device, the second training being carried out on the synthesised data, and
      - training of the generative adversarial neural network, the training of the generative adversarial neural network being carried out using the random numbers and using a cost function based on the ability to deceive the classification device, the cost function based on the ability to deceive the classification device using the values of the logits associated with each prediction,

         - improvement

      in the quality of the confidence estimate presented by the said classification device by repeating the training and synthesis steps until a first performance criterion on the predictions and a second performance criterion on the confidence values of the predictions of the classification system are met;

   - a use phase of said improved classification device via said improvement phase, said use phase comprising the steps of:

      - acquisition of an input signal by at least one sensor (12), and
      - classification of the acquired signal into predefined classes using the classification device (14).

FIG.1

**FIG.2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- *DeGAN : Data-Enriching GAN for Retrieving Representative Samples from a Trained Classifier*, 27 December 2019

- **LAN GOODFELLOX ; YOSHUA BENGIO ; AARON COURVILLE**. Deep Learning. The MIT Press, 18 November 2016